# EUROPEAN PATENT APPLICATION

(11) **EP 4 455 150 A1**
(43) Date of publication of application: **30.10.2024**
(21) Application number: 22911349.3
(22) Date of filing: 22.12.2022
(51) Int. Cl.: C07F 1/08

(54) **ORGANIC COPPER COMPOUND, AND METHOD FOR PRODUCING ORGANIC COPPER COMPOUND**

(30) Priority: 23.12.2021 JP 2021209587
(71) Applicant: SynCrest Inc., Fujisawa-shi, Kanagawa 251-8555 (JP)
(72) Inventor: XU, Pengyu, Fujisawa-shi, Kanagawa 251-8555 (JP); YONEYAMA, Shin, Fujisawa-shi, Kanagawa 251-8555 (JP)
(74) Representative: Meissner Bolte Partnerschaft mbB
(86) International application number: PCT/JP2022/047381
(87) International publication number: WO 2023/120647

(57) **Abstract**

An object of the present invention is to provide a novel organic copper compound useful for the synthesis of special amino acids. Provided are an organic copper compound and a method for producing an organic copper compound.

## Description

### Technical Field

The present invention relates to an organic copper compound and a method for producing an organic copper compound.

### Background Art

NPL 1 discloses an organic iodine zinc compound protected with a 9-fluorenylmethyloxycarbonyl protecting group (Fmoc).

PTL 1 discloses an organic iodine zinc compound protected with a tert-butoxycarbonyl protecting group (Boc) and an organic bromine zinc compound protected with Boc.

PTL 2 discloses an organic iodine zinc compound protected with Boc and an organic iodine zinc compound protected with a benzyloxycarbonyl protecting group (Cbz).

### Citation List

### Patent Literature

PTL 1: CN-A-111777571
PTL 2: CN-A-111471003

### Non-patent Literature

NPL 1: Org. Biomol. Chem., 1(23), 4254-4261 (2003)

### Summary of Invention

### Technical Problem

An object of the present invention is to provide a novel organic copper compound useful for the synthesis of special amino acids.

### Solution to Problem

As a result of extensive studies to achieve the above object, the present inventors succeeded in producing a novel organic copper compound useful for the synthesis of special amino acids by using a copper agent.

Upon further studies based on this finding, the present inventors have completed the present invention.

Specifically, the present invention includes an organic copper compound and a method for producing an organic copper compound described below.

### Item 1.

An organic copper compound represented by the following formula (1): 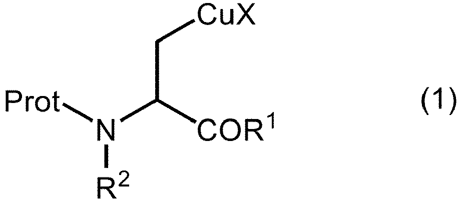 wherein
X is a chlorine atom, a bromine atom, a cyano group, or a trifluoromethanesulfonate group,
Prot is a protecting group selected from a 9-fluorenylmethyloxycarbonyl protecting group, a tert-butoxycarbonyl protecting group, an allyloxycarbonyl protecting group, or a benzyloxycarbonyl protecting group,
R¹ is a hydroxyl group or a protecting group for a carboxylic acid, and
R² is a hydrogen atom or an alkyl group.

### Item 2.

A method for producing an organic copper compound represented by the following formula (1): 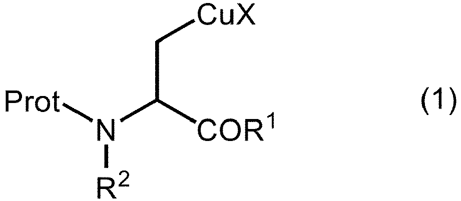 wherein
X is a chlorine atom, a bromine atom, a cyano group, or a trifluoromethanesulfonate group,
Prot is a protecting group selected from a 9-fluorenylmethyloxycarbonyl protecting group, a tert-butoxycarbonyl protecting group, an allyloxycarbonyl protecting group, or a benzyloxycarbonyl protecting group,
R¹ is a hydroxyl group or a protecting group for a carboxylic acid, and
R² is a hydrogen atom or an alkyl group;
the method comprising reacting a compound represented by the following formula (2): 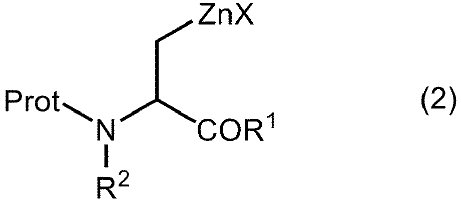 wherein
X, Prot, R¹, and R² are as defined in formula (1),
and a copper agent in an organic solvent.

### Item 3.

The production method according to claim 2,
wherein
when a compound of formula (1) wherein X is a chlorine atom or a bromine atom is produced, the copper agent is at least one compound selected from the group consisting of copper(I) chloride, copper(I) bromide, and copper(I) iodide; and
when a compound of formula (1) wherein X is a cyano group is produced, the copper agent is copper(I) cyanide.

When a compound of formula (1) wherein X is a chlorine atom or a bromine atom is produced, the copper agent is preferably at least one compound selected from the group consisting of copper(I) chloride, copper(I) bromide, and copper(I) iodide, and the reaction is performed in the presence (combination) of at least one compound selected from the group consisting of lithium chloride, lithium bromide, and lithium iodide.

When a compound of formula (1) wherein X is a cyano group is produced, the copper agent is preferably copper(I) cyanide, and the reaction is performed in the presence (combination) of lithium chloride.

### Item 4.

The production method according to claim 2 or 3,
wherein the organic solvent is at least one organic solvent selected from the group consisting of an aprotic polar solvent, a halogen solvent, an ether solvent, an ester solvent, a hydrocarbon solvent, and an aromatic solvent.

The organic copper compound is excellent in stability and useful for the synthesis of special amino acids, particularly for derivatization into aryl-type special amino acids.

### Advantageous Effects of Invention

The present invention can provide a novel organic copper compound useful for the synthesis of special amino acids.

### Description of Embodiments

The present invention is described in detail below.

In the present specification, the terms "comprise" and "contain" include the concepts of "comprise," "contain," "consist essentially of," and "consist of."

In the present specification, a numerical range indicated by "A to B" means "A or more and B or less."

### [1] Method for Producing Organic Copper Compound

The method for producing an organic copper compound represented by the following formula (1): 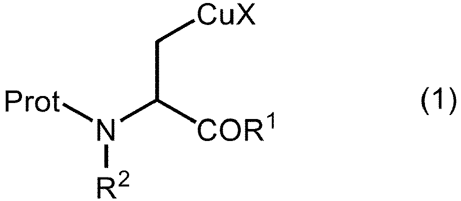 wherein
X is a chlorine atom, a bromine atom, a cyano group (-C=N, CN), or a trifluoromethanesulfonate group (CF₃SO₃-, a TfO group),
Prot is a protecting group selected from a 9-fluorenylmethyloxycarbonyl protecting group (Fmoc), a tert-butoxycarbonyl protecting group (Boc), an allyloxycarbonyl protecting group (Alloc), or a benzyloxycarbonyl protecting group (Cbz),
R¹ is a hydroxyl group or a protecting group for a carboxylic acid, and
R² is a hydrogen atom or an alkyl group,
of the present invention (hereinafter also referred to as "the method for producing an organic copper compound of the present invention") comprises reacting a compound represented by the following formula (2): 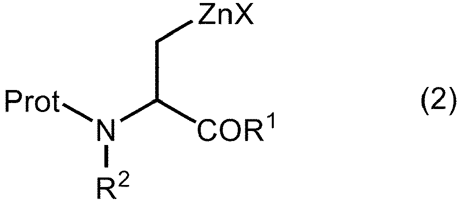
wherein X, Prot, R¹, and R² are as defined in formula (1),
and a copper agent in an organic solvent.

In the method for producing an organic copper compound of the present invention, when a compound of formula (1) wherein X is a chlorine atom or a bromine atom is produced, the copper agent is preferably at least one compound selected from the group consisting of copper(I) chloride (CuCl), copper(I) bromide (CuBr), and copper(I) iodide (CuI).

In the method for producing an organic copper compound of the present invention, when a compound of formula (1) wherein X is a chlorine atom or a bromine atom is produced, the copper agent is preferably at least one compound selected from the group consisting of copper(I) chloride (CuCl), copper(I) bromide (CuBr), and copper(I) iodide (CuI), and the reaction is performed in the presence (combination) of at least one compound selected from the group consisting of lithium chloride (LiCl), lithium bromide (LiBr), and lithium iodide (LiI).

In the method for producing an organic copper compound of the present invention, when a compound of formula (1) wherein X is a cyano group is produced, the copper agent is preferably copper(I) cyanide (CuCN).

In the method for producing an organic copper compound of the present invention, when a compound of formula (1) wherein X is a cyano group is produced, the copper agent is preferably copper(I) cyanide (CuCN), and the reaction is performed in the presence (combination) of lithium chloride (LiCl).

In the method for producing an organic copper compound of the present invention, the organic solvent is preferably at least one organic solvent selected from the group consisting of an aprotic polar solvent, a halogen solvent, an ether solvent, an ester solvent, a hydrocarbon solvent, and an aromatic solvent.

The organic copper compound is excellent in stability and useful for the synthesis of special amino acids, particularly for derivatization into aryl-type special amino acids.

### [1-1] Compound Represented by Formula (2)

The method for producing an organic copper compound of the present invention uses a compound represented by the following formula (2): 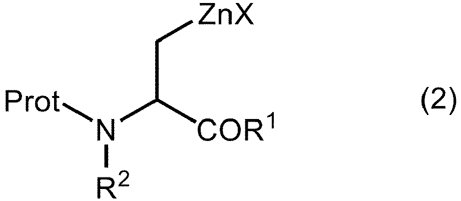 as a substrate (raw material compound) and comprises reacting this compound with a copper agent in an organic solvent.

In formula (2), X is a chlorine atom, a bromine atom, a cyano group, or a trifluoromethanesulfonate group.

In formula (2), Prot is a protecting group selected from a 9-fluorenylmethyloxycarbonyl protecting group, a tert-butoxycarbonyl protecting group, an allyloxycarbonyl protecting group, or a benzyloxycarbonyl protecting group.

In formula (2), R¹ is a hydroxyl group or a protecting group for a carboxylic acid.

In formula (2), R¹ is preferably a protecting group for a carboxylic acid. Generally known protecting groups for carboxylic acids may be used. Examples include the protecting groups described in chapter 5 of "Protective Groups in Organic Synthesis, 1981, John Wiley & Sons, Inc." by Theodora W. Greene.

In formula (2), R¹ is more preferably
a C₁₋₄ linear or branched alkoxy group, such as methoxy, ethoxy, n-propoxy, isopropyloxy, n-butoxy, isobutyloxy, sec-butoxy, tert-butoxy, or 1-ethylpropyloxy;
a C₁₋₁₈ linear or branched alkoxy group, such as n-pentyloxy, isopentyloxy, neopentyloxy, n-hexyloxy, isohexyloxy, 3-methylpentyloxy, n-heptyloxy, n-octyloxy, n-nonyloxy, n-decyloxy, n-undecyloxy, n-dodecyloxy, 5-propylnonyloxy, n-tridecyloxy, n-tetradecyloxy, n-pentadecyloxy, hexadecyloxy, heptadecyloxy, or octadecyloxy;
a C₃₋₈ cyclic alkoxy group, such as cyclopropyloxy, cyclobutyloxy, cyclopentyloxy, cyclohexyloxy, cycloheptyloxy, or cyclooctyloxy;
an optionally substituted phenoxy group, such as phenoxy, 2,6-dimethylphenoxy, 2,6-di-tert-butyl-4-methylphenoxy, or 2-(dimethylamino)-5-nitrophenoxy;
an optionally substituted benzyl group, such as benzyloxy, diphenylmethyloxy, or triphenylmethyloxy;
an optionally substituted phenacyloxy group, such as phenacyloxy, p-bromophenacyloxy, α-methylphenacyloxy, or 3,4,5-trimethoxyphenacyloxy;
a trialkylsilyloxy group, such as trimethylsilyloxy or triethylsilyloxy; or the like.

In formula (2), R¹ is even more preferably a C₁₋₄ linear or branched alkoxy group, an optionally substituted phenoxy group, or an optionally substituted benzyloxy group.

In formula (2), R¹ is particularly preferably methoxy, tert-butoxy, or the like.

In formula (2), R² is a hydrogen atom or an alkyl group.

In formula (2), R² is preferably a hydrogen atom or a linear, branched, or cyclic alkyl group.

Specific examples include hydrogen atoms;
C₁₋₄ linear or branched alkyl groups, such as methyl, ethyl, n-propyl, isopropyl, n-butyl, isobutyl, sec-butyl, tert-butyl, and 1-ethylpropyl;
C₁₋₁₈ linear or branched alkyl groups, such as n-pentyl, isopentyl, neopentyl, n-hexyl, isohexyl, 3-methylpentyl, n-heptyl, n-octyl, n-nonyl, n-decyl, n-undecyl, n-dodecyl, 5-propylnonyl, n-tridecyl, n-tetradecyl, n-pentadecyl, hexadecyl, heptadecyl, and octadecyl;
C₃₋₈ cyclic alkyl groups, such as cyclopropyl, cyclobutyl, cyclopentyl, cyclohexyl, cycloheptyl, and cyclooctyl; and the like.

In formula (2), R² is more preferably a hydrogen atom, a C₁₋₄ linear or branched alkyl group, or the like.

In formula (2), R² is even more preferably a hydrogen atom, methyl, or the like.

The compound represented by formula (2) includes a compound whose three-dimensional structure is L type (compound represented by formula (2a) (L-form)) or D type (compound represented by formula (2b) (D-form)), or a mixture of an L-type compound and a D-type compound. 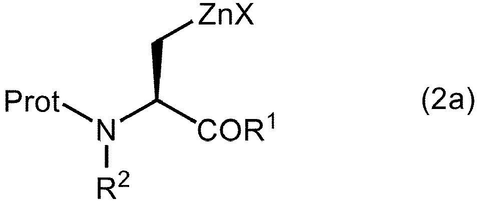 wherein
X is a chlorine atom, a bromine atom, a cyano group, or a trifluoromethanesulfonate group,
Prot is a protecting group selected from a 9-fluorenylmethyloxycarbonyl protecting group, a tert-butoxycarbonyl protecting group, an allyloxycarbonyl protecting group, or a benzyloxycarbonyl protecting group,
R¹ is a hydroxyl group or a protecting group for a carboxylic acid, and
R² is a hydrogen atom or an alkyl group. 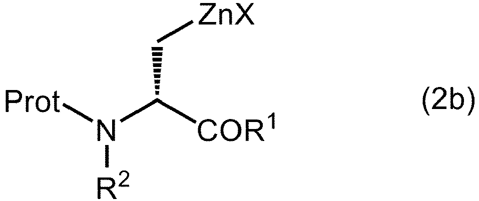
wherein
X is a chlorine atom, a bromine atom, a cyano group, or a trifluoromethanesulfonate group,
Prot is a protecting group selected from a 9-fluorenylmethyloxycarbonyl protecting group, a tert-butoxycarbonyl protecting group, an allyloxycarbonyl protecting group, or a benzyloxycarbonyl protecting group,
R¹ is a hydroxyl group or a protecting group for a carboxylic acid, and
R² is a hydrogen atom or an alkyl group.

The compound represented by formula (2) used in the method for producing an organic copper compound of the present invention can be produced by reacting a compound represented by formula (3) with zinc according to a conventionally known method, for example, the method described in Org. Biomol. Chem., 1(23), 4254-4261 (2003). 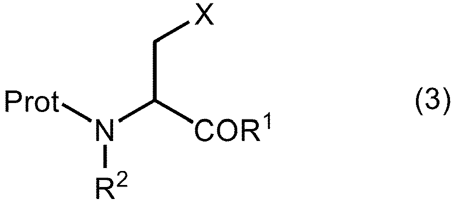 wherein
X is a chlorine atom, a bromine atom, a cyano group, or a trifluoromethanesulfonate group,
Prot is a protecting group selected from a 9-fluorenylmethyloxycarbonyl protecting group, a tert-butoxycarbonyl protecting group, an allyloxycarbonyl protecting group, or a benzyloxycarbonyl protecting group,
R¹ is a hydroxyl group or a protecting group for a carboxylic acid, and
R² is a hydrogen atom or an alkyl group.

When X in the compound represented by formula (3) is a chlorine atom or a bromine atom, the compound represented by formula (3) can be reacted with zinc in an organic solvent in the presence of a halogen compound, thereby producing the compound represented by formula (2).

The organic solvent is preferably at least one organic solvent selected from the group consisting of an aprotic polar solvent, a halogen solvent, an ether solvent, an ester solvent, a hydrocarbon solvent, and an aromatic solvent.

The amount of the organic solvent used may be adjusted so that the concentration of the compound represented by formula (3) (M (mol/L)) is preferably 0.01 M to 5 M, and more preferably 0.1 M to 2 M.

The halogen compound is preferably at least one halogen compound selected from the group consisting of halogen and alkyl halide.

The alkyl halide is an organic compound represented by formula R^{a}-X^{a}, wherein R^{a} is an alkyl group and X^{a} is a halogen atom.

In formula R^{a}-X^{a}, R^{a} is an alkyl group, and preferably a linear, branched, or cyclic alkyl group.

Specific examples include
C₁₋₄ linear or branched alkyl groups, such as methyl, ethyl, n-propyl, isopropyl, n-butyl, isobutyl, sec-butyl, tert-butyl, and 1-ethylpropyl;
C₁₋₁₈ linear or branched alkyl groups, such as n-pentyl, isopentyl, neopentyl, n-hexyl, isohexyl, 3-methylpentyl, n-heptyl, n-octyl, n-nonyl, n-decyl, n-undecyl, n-dodecyl, 5-propylnonyl, n-tridecyl, n-tetradecyl, n-pentadecyl, hexadecyl, heptadecyl, and octadecyl;
C₃₋₈ cyclic alkyl groups, such as cyclopropyl, cyclobutyl, cyclopentyl, cyclohexyl, cycloheptyl, and cyclooctyl; and the like.

In formula R^{a}-X^{a}, X^{a} is a halogen atom, preferably at least one halogen atom selected from the group consisting of fluorine, chlorine, bromine, and iodine, and more preferably a chlorine atom or a bromine atom.

The amount of the halogen compound used may be adjusted so that the concentration (M (mol/L)) in the organic solvent is preferably 0.01 M to 5 M, and more preferably 0.1 M to 2 M.

The amount of zinc used may be adjusted so that the concentration (M (mol/L)) in the organic solvent is preferably 0.01 M to 5 M, and more preferably 0.1 M to 2 M.

In the method for producing a compound represented by formula (2), the reaction temperature may be preferably 0°C to 100°C, more preferably 10°C to 80°C, and even more preferably 20°C to 60°C.

In the method for producing a compound represented by formula (2), the reaction time may be preferably 0.1 hours to 100 hours, more preferably 0.1 hours to 50 hours, and even more preferably 0.1 hours to 10 hours.

According to this production method, the configuration at the α-position of the compound represented by formula (3) used is maintained as the configuration at the α-position of the resulting compound represented by formula (2). Therefore, a compound represented by formula (2a), a compound represented by formula (2b), or a mixture of the compound represented by formula (2a) and the compound represented by formula (2b) can be produced by selecting the compound represented by formula (3) used.

### [1-2] Organic Solvent

The method for producing an organic copper compound of the present invention comprises reacting the compound represented by formula (2) (substrate) and a copper agent in an organic solvent.

The organic solvent is preferably at least one organic solvent selected from the group consisting of an aprotic polar solvent, a halogen solvent, an ether solvent, an ester solvent, a hydrocarbon solvent, and an aromatic solvent.

The aprotic polar solvent is preferably acetone, acetonitrile, N,N-dimethylformamide (DMF), dimethyl sulfoxide (DMSO), or the like.

The halogen solvent is preferably dichloromethane (CH₂Cl₂), trichloromethane (CHCl₃), or the like.

The ether solvent is preferably tetrahydrofuran (THF), dioxane, diethyl ether (Et₂O), isopropyl ether (IPE), or the like.

The ester solvent is preferably ethyl acetate (AcOEt) or the like.

The hydrocarbon solvent is preferably n-hexane or the like.

The aromatic solvent is preferably toluene or the like.

The organic solvent is more preferably an aprotic polar solvent, such as acetone, acetonitrile, DMF, or DMSO; an ether solvent (polar solvent), such as THF, dioxane, or diethyl ether; or a halogen solvent, such as dichloromethane or trichloromethane.

The amount of the organic solvent used is adjusted so that the concentration (M (mol/L)) of the compound represented by formula (2) (substrate) is preferably 0.01 M to 5 M, and more preferably 0.1 M to 2 M.

### [1-3] Copper Agent

The method for producing an organic copper compound of the present invention comprises reacting the compound represented by formula (2) and a copper agent in an organic solvent.

The copper (Cu) in the organic copper compound represented by formula (1), which is the product produced by the method for producing an organic copper compound of the present invention, is derived from the copper agent used as a substrate (raw material compound).

In the method for producing an organic copper compound of the present invention, when a compound of formula (1) wherein X is a chlorine atom (Cl) or a bromine atom (Br) is produced, the copper agent is preferably at least one compound selected from the group consisting of copper(I) chloride, copper(I) bromide, and copper(I) iodide.

In the method for producing an organic copper compound of the present invention, when a compound of formula (1) wherein X is a chlorine atom (Cl) or a bromine atom (Br) is produced, the copper agent is preferably at least one compound selected from the group consisting of copper(I) chloride, copper(I) bromide, and copper(I) iodide, and the reaction is performed in the presence (combination) of at least one compound selected from the group consisting of lithium chloride, lithium bromide, and lithium iodide.

In the method for producing an organic copper compound of the present invention, when a compound of formula (1) wherein X is a cyano group is produced, the copper agent is preferably copper(I) cyanide.

In the method for producing an organic copper compound of the present invention, when a compound of formula (1) wherein X is a cyano group is produced, the copper agent is preferably copper(I) cyanide (CuCN), and the reaction is performed in the presence (combination) of lithium chloride.

In the method for producing an organic copper compound of the present invention, when a compound of formula (1) wherein X is a chlorine atom or a bromine atom is produced, the copper agent is more preferably a combination of copper(I) chloride and lithium chloride.

In the method for producing an organic copper compound of the present invention, when a compound of formula (1) wherein X is a cyano group is produced, the copper agent is more preferably a combination of copper(I) cyanide and lithium chloride.

In the method for producing an organic copper compound of the present invention, the amount of the copper agent used is adjusted so that the concentration (M (mol/L)) in the organic solvent is preferably 0.01 M to 5 M, and more preferably 0.1 M to 2 M.

In the method for producing an organic copper compound of the present invention, the amount of the copper agent used is preferably 20 mol% to 10,000 mol%, more preferably 80 mol% to 1,000 mol%, and even more preferably 90 mol% to 500 mol%, in molar ratio as a concentration relative to the compound represented by formula (2) (substrate) (when the concentration of the substrate is 100 mol%).

In the method for producing an organic copper compound of the present invention, the amount of lithium hydride (LiCl, LiBr, LiI, or the like) used in the copper agent is preferably 0.2 equivalent to 200 equivalent, more preferably 0.8 equivalent to 20 equivalent, and even more preferably 0.9 equivalent to 10 equivalent, in molar ratio as an equivalent relative to the compound represented by formula (2) (substrate) (when the equivalent of the substrate is 1 equivalent).

In the method for producing an organic copper compound of the present invention,
the amount of the copper agent used is,
relative to the compound represented by formula (2) (substrate) (when the equivalent of the substrate is 1 equivalent),
2 equivalent of lithium chloride in molar ratio as an equivalent,
particularly relative to 1 equivalent of at least one compound selected from the group consisting of copper(I) chloride, copper(I) bromide, copper(I) iodide, and copper(I) cyanide.

The target compound, i.e., the organic copper compound represented by formula (1), can be obtained with a maximum yield.

The method for producing an organic copper compound of the present invention can produce a novel organic copper compound by using a copper agent, and this organic copper compound is excellent in stability.

The organic copper compound of the present invention is useful for the synthesis of special amino acids, particularly for derivatization into aryl-type special amino acids.

### [1-4] Method for Producing Organic Copper Compound

The method for producing an organic copper compound of the present invention can produce a novel organic copper compound by using a copper agent, and this organic copper compound is excellent in stability and useful for the synthesis of special amino acids, particularly for derivatization into aryl-type special amino acids.

In the method for producing an organic copper compound of the present invention, the reaction temperature is preferably 0°C to 100°C, more preferably 10°C to 80°C, and even more preferably 20°C to 60°C.

The production method of the present invention can produce the target organic copper compound while keeping the three-dimensional structure of the substrate.

When the compound represented by formula (2a), whose three-dimensional structure is L type, is used as the substrate, an organic copper compound represented by formula (1a) (L-form) can be produced. 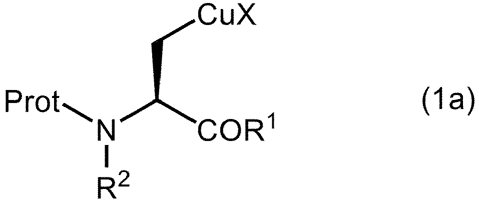 wherein
X is a chlorine atom, a bromine atom, a cyano group, or a trifluoromethanesulfonate group,
Prot is a protecting group selected from a 9-fluorenylmethyloxycarbonyl protecting group, a tert-butoxycarbonyl protecting group, an allyloxycarbonyl protecting group, or a benzyloxycarbonyl protecting group,
R¹ is a hydroxyl group or a protecting group for a carboxylic acid, and
R² is a hydrogen atom or an alkyl group. 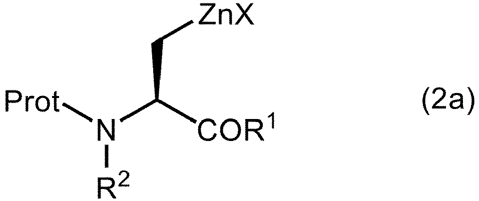
wherein X, Prot, R¹, and R² are as defined in formula (1a).

On the other hand, when the compound represented by formula (2b), whose three-dimensional structure is D type, is used as the substrate, an organic copper compound represented by formula (1b) (D-form) can be produced. 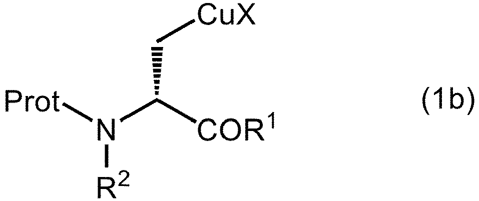 wherein
X is a chlorine atom, a bromine atom, a cyano group, or a trifluoromethanesulfonate group,
Prot is a protecting group selected from a 9-fluorenylmethyloxycarbonyl protecting group, a tert-butoxycarbonyl protecting group, an allyloxycarbonyl protecting group, or a benzyloxycarbonyl protecting group,
R¹ is a hydroxyl group or a protecting group for a carboxylic acid, and
R² is a hydrogen atom or an alkyl group. 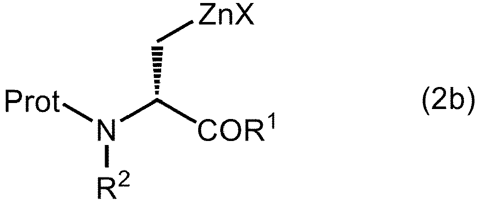
wherein X, Prot, R¹, and R² are as defined in formula (1a).

Similarly, when a mixture of L- and D-forms is used as the substrate as the compound represented by formula (2), a mixture of L- and D-forms of the organic copper compound represented by formula (1), in which the proportion of L- and D-forms is maintained, is produced.

### [2] Organic Copper Compound

The organic copper compound of the present invention is represented by the following formula (1): 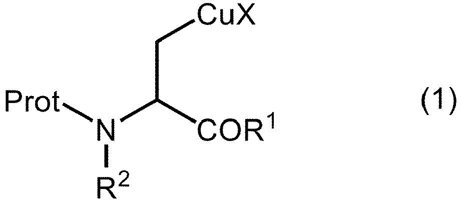 wherein
X is a chlorine atom, a bromine atom, a cyano group, or a trifluoromethanesulfonate group,
Prot is a protecting group selected from a 9-fluorenylmethyloxycarbonyl protecting group, a tert-butoxycarbonyl protecting group, an allyloxycarbonyl protecting group, or a benzyloxycarbonyl protecting group,
R¹ is a hydroxyl group or a protecting group for a carboxylic acid, and
R² is a hydrogen atom or an alkyl group.

The organic copper compound of the present invention can be produced by the method for producing an organic copper compound of the present invention by reacting the compound represented by formula (2) and a copper agent in an organic solvent.

In formula (1), X is a chlorine atom, a bromine atom, a cyano group, or a trifluoromethanesulfonate group.

In formula (1), Prot is a protecting group selected from a 9-fluorenylmethyloxycarbonyl protecting group, a tert-butoxycarbonyl protecting group, an allyloxycarbonyl protecting group, or a benzyloxycarbonyl protecting group.

In formula (1), R¹ is a hydroxyl group or a protecting group for a carboxylic acid.

In formula (1), R¹ is preferably a protecting group for a carboxylic acid. Generally known protecting groups for carboxylic acids may be used. Examples include the protecting groups described in chapter 5 of "Protective Groups in Organic Synthesis, 1981, John Wiley & Sons, Inc." by Theodora W. Greene.

In formula (1), R¹ is more preferably
a C₁₋₄ linear or branched alkoxy group, such as methoxy, ethoxy, n-propoxy, isopropyloxy, n-butoxy, isobutyloxy, sec-butoxy, tert-butoxy, or 1-ethylpropyloxy;
a C₁₋₁₈ linear or branched alkoxy group, such as n-pentyloxy, isopentyloxy, neopentyloxy, n-hexyloxy, isohexyloxy, 3-methylpentyloxy, n-heptyloxy, n-octyloxy, n-nonyloxy, n-decyloxy, n-undecyloxy, n-dodecyloxy, 5-propylnonyloxy, n-tridecyloxy, n-tetradecyloxy, n-pentadecyloxy, hexadecyloxy, heptadecyloxy, or octadecyloxy;
a C₃₋₈ cyclic alkoxy group, such as cyclopropyloxy, cyclobutyloxy, cyclopentyloxy, cyclohexyloxy, cycloheptyloxy, or cyclooctyloxy;
an optionally substituted phenoxy group, such as phenoxy, 2,6-dimethylphenoxy, 2,6-di-tert-butyl-4-methylphenoxy, or 2-(dimethylamino)-5-nitrophenoxy;
an optionally substituted benzyl group, such as benzyloxy, diphenylmethyloxy, or triphenylmethyloxy;
an optionally substituted phenacyloxy group, such as phenacyloxy, p-bromophenacyloxy, α-methylphenacyloxy, or 3,4,5-trimethoxyphenacyloxy;
a trialkylsilyloxy group, such as trimethylsilyloxy or triethylsilyloxy; or the like.

In formula (1), R¹ is more preferably a C₁₋₄ linear or branched alkoxy group, an optionally substituted phenoxy group, or an optionally substituted benzyloxy group.

In formula (1), R¹ is particularly preferably methoxy, tert-butoxy, or the like.

In formula (1), R² is a hydrogen atom or an alkyl group.

In formula (1), R² is preferably a hydrogen atom or a linear, branched, or cyclic alkyl group.

Specific examples include a hydrogen atom;
C₁₋₄ linear or branched alkyl groups, such as methyl, ethyl, n-propyl, isopropyl, n-butyl, isobutyl, sec-butyl, tert-butyl, and 1-ethylpropyl;
C₁₋₁₈ linear or branched alkyl groups, such as n-pentyl, isopentyl, neopentyl, n-hexyl, isohexyl, 3-methylpentyl, n-heptyl, n-octyl, n-nonyl, n-decyl, n-undecyl, n-dodecyl, 5-propylnonyl, n-tridecyl, n-tetradecyl, n-pentadecyl, hexadecyl, heptadecyl, and octadecyl;
C₃₋₈ cyclic alkyl groups, such as cyclopropyl, cyclobutyl, cyclopentyl, cyclohexyl, cycloheptyl, and cyclooctyl; and the like.

In formula (1), R² is more preferably a hydrogen atom, a C₁₋₄ linear or branched alkyl group, or the like.

In formula (1), R² is even more preferably a hydrogen atom, methyl, or the like.

The compound represented by formula (1) includes a compound whose three-dimensional structure is L type (organic copper compound represented by formula (1a)) or D type (organic copper compound represented by formula (1b)), or a mixture of an L-type compound and a D-type compound. 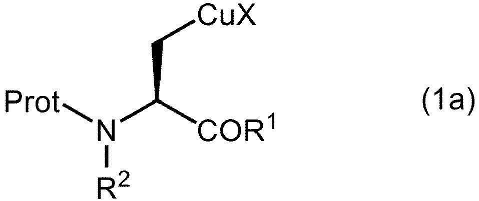 wherein
X is a chlorine atom, a bromine atom, a cyano group, or a trifluoromethanesulfonate group,
Prot is a protecting group selected from a 9-fluorenylmethyloxycarbonyl protecting group, a tert-butoxycarbonyl protecting group, an allyloxycarbonyl protecting group, or a benzyloxycarbonyl protecting group,
R¹ is a hydroxyl group or a protecting group for a carboxylic acid, and
R² is a hydrogen atom or an alkyl group. 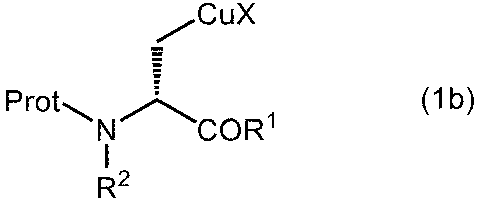
wherein
X is a chlorine atom, a bromine atom, a cyano group, or a trifluoromethanesulfonate group,
Prot is a protecting group selected from a 9-fluorenylmethyloxycarbonyl protecting group, a tert-butoxycarbonyl protecting group, an allyloxycarbonyl protecting group, or a benzyloxycarbonyl protecting group,
R¹ is a hydroxyl group or a protecting group for a carboxylic acid, and
R² is a hydrogen atom or an alkyl group.

The organic copper compound of the present invention is excellent in stability and useful for the synthesis of special amino acids, particularly for derivatization into allyl-type (aryl-type) special amino acids.

The embodiments of the present invention are described above; however, the present invention is not limited to these examples. Needless to say, the present invention can be implemented in various forms within the scope not departing from the gist of the present invention.

### Examples

Embodiments of the present invention are described in more detail below based on Examples.

The present invention is not limited thereto.

In the Examples, MeO represents a methoxy group, and t-BuO represents a tert-butoxy group.

### Reference Example

### (Production of Compound of Formula (2) wherein Prot=Fmoc, X=Br, R¹=MeO, and R²=H)

Zinc (3 mmol, 196.2 mg) and iodine (0.02 mmol, 5 mg) were placed in sequence in dimethyl sulfoxide (DMSO) (5 mL), followed by stirring for 1 minute to 5 minutes.

A protected (l)-bromoserine methyl ester (a compound of formula (3) wherein Prot=Fmoc, X=Br, R¹=MeO, and R²=H) (2 mmol, 800 mg) was added, followed by stirring for 12 hours, thereby obtaining a compound represented by formula (2) (L-form: a compound wherein Prot=Fmoc, X=Br, R¹=MeO, and R²=H).

After the obtained organic zinc compound was freeze-dried, NMR was measured in DMSO-d6 and is shown below.

1H NMR (300 MHz, d6-DMSO): 8.03 (d, J = 8.4 Hz, 1H), 7.90 (d, J = 7.2 Hz, 2H), 7.73 (d, J = 7.2 Hz, 2H), 7.43 (t, J = 6.9 Hz, 2H), 7.34 (t, J = 6.9 Hz, 2H), 6.30 (d, J = 6.6 Hz, 1H), 3.96-3.89 (m, 1H), 3.54 (s, 3H), 0.27-0.18 (m, 2H)

### Production Method of Examples

### Example 1

### (Production of Compound of Formula (1) wherein Prot=Fmoc, X=Cl, R¹=MeO, and R²=H)

Copper(I) chloride (CuCl) (2 mmol, 200 mg) and lithium chloride (LiCl) (4 mmol, 170 mg) were placed in a dimethyl sulfoxide (DMSO) solvent (1 mL) as an organic solvent, followed by stirring for 30 minutes at room temperature.

Thereafter, the reaction liquid was cooled to 0°C, and a DMSO solvent (5 mL) containing an organic zinc compound (a compound of formula (2a) (L-form) wherein Prot=Fmoc, X=Cl, R¹=MeO, and R²=H) (850 mg) as a substrate was placed, followed by stirring for 1 hour to 10 hours.

As a result of the above production method, an organic copper compound (a compound of formula (1a) (L-form) wherein Prot=Fmoc, X=Cl, R¹=MeO, and R²=H) could be obtained.

After the obtained organic copper compound was freeze-dried, NMR was measured in DMSO-d6 and is shown below.

1H NMR (300 MHz, d6-DMSO): 8.02 (d, J = 8.4 Hz, 1H), 7.90 (d, J = 7.4 Hz, 2H), 7.73 (d, J = 7.4 Hz, 2H), 7.44 (t, J = 6.9 Hz, 2H), 7.34 (t, J = 6.9 Hz, 2H), 6.30 (d, J = 6.6 Hz, 1H), 3.85-3.79 (m, 1H), 3.54 (s, 3H), 0.37-0.29 (m, 2H)

### Example 2

### (Production of Compound of Formula (1) wherein Prot=Fmoc, X=Cl, R¹=MeO, and R²=H)

Copper(I) cyanide (CuCN) (2 mmol, 180 mg) and lithium chloride (LiCl) (4 mmol, 170 mg) were placed in a dimethyl sulfoxide (DMSO) solvent (1 mL) as an organic solvent, followed by stirring for 30 minutes at room temperature.

Thereafter, the reaction liquid was cooled to 0°C, and a DMSO solvent (5 mL) containing an organic zinc compound (a compound of formula (2a) (L-form) wherein Prot=Fmoc, X=Cl, R¹=MeO, and R²=H) (850 mg) as a substrate was placed, followed by stirring for 1 hour to 10 hours.

As a result of the above production method, an organic copper compound (a compound of formula (1a) (L-form) wherein Prot=Fmoc, X=Cl, R¹=MeO, and R²=H) could be obtained.

After the obtained organic copper compound was freeze-dried, NMR was measured in DMSO-d6 and is shown below.

1H NMR (300 MHz, d6-DMSO): 8.02 (d, J = 8.4 Hz, 1H), 7.90 (d, J = 7.4 Hz, 2H), 7.73 (d, J = 7.4 Hz, 2H), 7.44 (t, J = 6.9 Hz, 2H), 7.34 (t, J = 6.9 Hz, 2H), 6.30 (d, J = 6.6 Hz, 1H), 3.85-3.79 (m, 1H), 3.53 (s, 3H), 0.49-0.39 (m, 2H)

### Example 3

### (Production of Compound of Formula (1) wherein Prot=Boc, X=Cl, R¹=MeO, and R²=H)

Copper(I) chloride (CuCl) (2 mmol, 200 mg) and lithium chloride (LiCl) (4 mmol, 170 mg) were placed in a dimethyl sulfoxide (DMSO) solvent (1 mL) as an organic solvent, followed by stirring for 30 minutes at room temperature.

Thereafter, the reaction liquid was cooled to 0°C, and a DMSO solvent (5 mL) containing an organic zinc compound (a compound of formula (2a) (L-form) wherein Prot=Boc, X=Cl, R¹=MeO, and R²=H) (610 mg) as a substrate was placed, followed by stirring for 1 hour to 10 hours.

As a result of the above production method, an organic copper compound (a compound of formula (1a) (L-form) wherein Prot=Boc, X=Cl, R¹=MeO, and R²=H) could be obtained.

After the obtained organic copper compound was freeze-dried, NMR was measured in DMSO-d6 and is shown below.

1H NMR (300 MHz, d6-DMSO): 6.11(d, J = 6.6 Hz, 1H), 3.85-3.79 (m, 1H), 3.53 (s, 3H), 1.39 (s, 9H), 0.49-0.41 (m, 2H)

### Example 4

### (Production of Compound of Formula (1) wherein Prot=Boc, X=Cl, R¹=MeO, and R²=H)

Copper(I) iodide (CuI) (2 mmol, 380 mg) and lithium chloride (LiCl) (4 mmol, 170 mg) were placed in a dimethyl sulfoxide (DMSO) solvent (1 mL) as an organic solvent, followed by stirring for 30 minutes at room temperature.

Thereafter, the reaction liquid was cooled to 0°C, and a DMSO solvent (5 mL) containing an organic zinc compound (a compound of formula (2a) (L-form) wherein Prot=Boc, X=Cl, R¹=MeO, and R²=H) (610 mg) as a substrate was placed, followed by stirring for 1 hour to 10 hours.

As a result of the above production method, an organic copper compound (a compound of formula (1a) (L-form) wherein Prot=Boc, X=Cl, R¹=MeO, and R²=H) could be obtained.

After the obtained organic copper compound was freeze-dried, NMR was measured in DMSO-d6 and is shown below.

1H NMR (300 MHz, d6-DMSO): 6.13 (d, J = 6.6 Hz, 1H), 3.85-3.79 (m, 1H), 3.53 (s, 3H), 1.30 (s, 9H), 0.22-0.11 (m, 2H)

### Industrial Applicability

The method for producing an organic copper compound of the present invention can produce a novel organic copper compound by using a copper agent, and this organic copper compound is excellent in stability.

The organic copper compound of the present invention is useful for the synthesis of special amino acids, particularly for derivatization into allyl-type (aryl-type) special amino acids.

## Claims

1. An organic copper compound represented by the following formula (1): 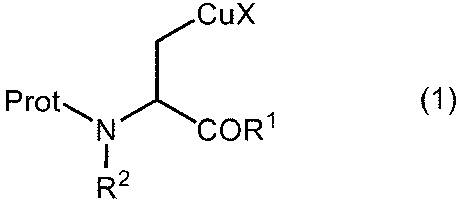 Wherein
X is a chlorine atom, a bromine atom, a cyano group, or a trifluoromethanesulfonate group,
Prot is a protecting group selected from a 9-fluorenylmethyloxycarbonyl protecting group, a tert-butoxycarbonyl protecting group, an allyloxycarbonyl protecting group, or a benzyloxycarbonyl protecting group,
R¹ is a hydroxyl group or a protecting group for a carboxylic acid, and
R² is a hydrogen atom or an alkyl group.

2. A method for producing an organic copper compound represented by the following formula (1): 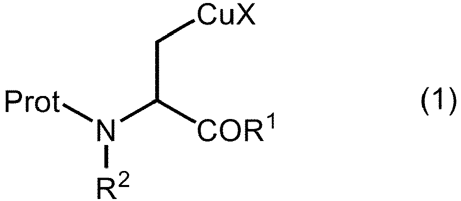 wherein
X is a chlorine atom, a bromine atom, a cyano group, or a trifluoromethanesulfonate group,
Prot is a protecting group selected from a 9-fluorenylmethyloxycarbonyl protecting group, a tert-butoxycarbonyl protecting group, an allyloxycarbonyl protecting group, or a benzyloxycarbonyl protecting group,
R¹ is a hydroxyl group or a protecting group for a carboxylic acid, and
R² is a hydrogen atom or an alkyl group;
the method comprising reacting a compound represented by the following formula (2): 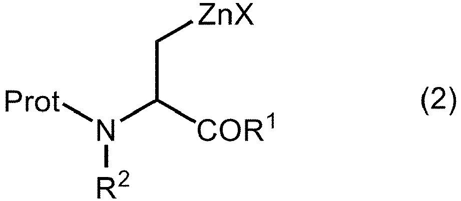 wherein
X, Prot, R¹, and R² are as defined in formula (1),
and a copper agent in an organic solvent.

3. The production method according to claim 2,
wherein
when a compound of formula (1) wherein X is a chlorine atom or a bromine atom is produced, the copper agent is at least one compound selected from the group consisting of copper(I) chloride, copper(I) bromide, and copper(I) iodide; and
when a compound of formula (1) wherein X is a cyano group is produced, the copper agent is copper(I) cyanide.

4. The production method according to claim 2 or 3,
wherein the organic solvent is at least one organic solvent selected from the group consisting of an aprotic polar solvent, a halogen solvent, an ether solvent, an ester solvent, a hydrocarbon solvent, and an aromatic solvent.
